(19)

Europäisches
Patentamt
European
Patent Office
Office européen
des brevets

(11) **EP 4 321 143 A1**

(12) **EUROPEAN PATENT APPLICATION**

(43) Date of publication:
**14.02.2024 Bulletin 2024/07**

(21) Application number: **23190762.7**

(22) Date of filing: **10.08.2023**

(51) International Patent Classification (IPC):
***A61J 3/07*** (2006.01)    ***G01F 19/00*** (2006.01)
***B01L 3/00*** (2006.01)

(52) Cooperative Patent Classification (CPC):
**G01F 19/00; A61J 3/07; A61J 3/074; B01L 3/569;**
**G01F 19/002**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.08.2022 BR 202022016094 U**

(71) Applicant: **SM Empreedimentos Farmacêuticos**
**Ltda.**
**04551-000 São Paulo (BR)**

(72) Inventor: **DE OLIVEIRA FERREIRA, Anderson**
**36015-460 Juiz de Fora (BR)**

(74) Representative: **Metroconsult Srl**
**Foro Bonaparte 51**
**20121 Milano (IT)**

(54) **GLASS CYLINDER WITH SPECIAL GRADUATIONS FOR REMAINING VOLUME FOR THE PREPARATION OF CAPSULES IN CAPSULES**

(57) The present application refers to a test-tube-type glass cylinder, with special and differentiated graduations, destined to fill the remaining volume in the compounding preparation of capsules of different sizes "combined", where there is a capsule inside another capsule. The model allows the filling of the external capsule in combination with several sizes of internal capsules, allows the combination of different dosages of the same drug with different release times and solid mixtures with different particle sizes, as well as the combination of different drugs, with precision, quickly, practically and without the use of calculations.

FIG. 1

**EP 4 321 143 A1**

**Description**

**Field of application**

The present application refers to a test-tube-type glass cylinder, with special and differentiated graduations, destined to fill the remaining volume in the componding preparation of capsules of different sizes "combined", where there is a capsule inside another capsule.

**Prior art**

Document BR112013001476 proposes an apparatus and process for the production of soft gelatin capsules (softgel) incorporating therein other solid dosage forms selected from the group consisting of pellets, smaller capsules, smaller tablets, solid sustained release dosage forms, immediate release solid dosage forms, sustained release solid dosage forms, and zero order release solid dosage forms, said apparatus comprising: (a) two dispensing boxes; (b) two casting drums; (c) a pair of rotating dies having means for suction; (d) a liquid filling system; (e) a wedge for heating gelatin ribbons and feeding said filling; and (f) two lateral dispensing devices, said lateral dispensing devices including hoppers containing said solid dosage forms, channel guides for transporting said solid dosage forms and a gripper for dispensing said dosage form solid in the pocket of soft gelatin formed on the rotating dies. This device is ideal for industrial use, but impracticable for compounding use, with several components, more energy expenditure. Different from the cylinder with special graduation for remaining volume, intended herein, that is easy to use, manual, ideal for compounding scale and individualization of capsules.

Document BR112020000384 provides a capsule with a dual dosage form, methods for the production thereof and systems for manufacturing the same, which can provide dual release of the two dosages. The capsule with a dual dosage form has a first capsule member containing a first fill material and a second capsule member containing a second fill material. A band couples the first capsule member to the second capsule member and forms a third chamber defined by an interior surface of the band and each lid of the capsule members. An opening allows fluid to enter the third chamber, causing the band to at least partially dissolve so that the caps of the capsule members are exposed. Capsule member caps can dissolve at the same or different rates to control the release time of the first and second fill materials and therefore an active ingredient included in the fill material. Here, too, it bears no resemblance to the cylinder with special graduation for remaining volume.

Document BR122020023630, divided from document BR112013001476, refers to a specific part of the matter disclosed in the "parent" application. It claims a process for making a soft gelatin capsule having another capsule incorporated therein, comprising: (a) feeding sheets of film between a first die roll and a second die roll wherein each die roll has capsule pockets in a plurality of rows and said capsule pockets have at least one hole for applying suction; (b) applying suction while said film is placed in the capsule pockets; (c) feeding through guide channels through a lateral dispensing device having a hopper and gripper to grab pre-formed smaller capsules onto the film sheets overlying the die rolls at positions that have the capsule pockets; (d) filling said capsule pockets also through a wedge segment with a liquid medical formulation; and (e) cutting the foil sheets around the capsule pockets to form said soft gel capsules with capsules in combination with a suitable liquid pharmaceutical blend. Also claimed are soft gelatin capsules incorporated in an external soft gelatin capsule, tablets incorporated in an external softgel capsule, microgranules incorporated in an external soft gelatin capsule and any combination of soft gelatin capsules, tablets and/or incorporated microgranules in an external soft gelatin capsule. The divided application also claims a soft gelatin capsule having incorporated therein another solid dosage form selected from the group consisting of: (a) one capsule that contains an omega oil and wherein the other solid dosage form is a capsule with a statin; (b) one capsule that contains a non-steroidal antiinflammatory and wherein the other solid dosage form contains an antihistamine; and (c) one capsule that contains an omega oil and wherein the other solid dosage form contains a salicylate. Here, as in document BR112013001476, there is no focus on the glass cylinder with special graduation for filling the remaining volume of said capsules in combination

As can be seen, all these models are nothing like the intended device for capsule-to-capsule manipulation.

Document BR2020200140324, which belongs to the applicant for this patent application, provides a glass cylinder (test tube type) with special and differentiated graduations for use in the compounding preparation of hard capsules. The technical solution adopted by the present application allows an appropriate choice of the size of the capsule to be used, as well as the exact definition of the amount of excipient necessary for the complete volumetric filling, with total precision and in a practical and fast way. The device determines the real apparent volume of the formulation (mixture in powder form) that is being manipulated/compounded, allowing the complete filling of the same and avoiding weight variation between the multiple units of capsules manipulated . This device allows the filling of the internal capsule.

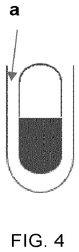

The device according to the present application provides a glass cylinder with special markings for filling the remaining volume, the space between the internal capsule and the external capsule (Figure 4), according to the size of each capsule.

One way to calculate the remaining volume is using the table described by HAUSS in 2007, Table 1.

Table 1. Capacities (approximate remaining volume) of the inner and outer capsule combination for preparing DUO capsules.

| Size of the internal capsule | #000 | #00 | #0 | #1 | #two | #3 | #4 |
|---|---|---|---|---|---|---|---|
| Capsule capacity (mL) | 1.36 | 0.95 | 0.67 | 0.48 | 0.37 | 0.27 | 0.20 |
| Internal capsule capacity (mL)/ #000 of external | N/A | N/A | 0.67/ 0.546 | N/U | N/U | N/U | N/U |
| Capacity of the internal capsule (mL) / # 00 of the external one | N/A | N/A | N/A | 0.435/ 0.235 | 0.325/ 0.375 | 0.250/ 0.510 | 0.190/ 0.585 |
| Capacity of the internal capsule ( mL ) / # 0 of the external one | | N/A | N/A | N/A | 0.325/ 0.140 | 0.250/ 0.255 | 0.190/ 0.355 |
| Capacity of the inner capsule ( mL ) / # 1 of the outer one | | N/A | N/A | N/A | N/A | 0.250/ 0.110 | 0.190/ 0.222 |
| Capacity of the internal capsule ( mL ) / # 2 of the external one | | N/A | N/A | N/A | N/A | N/A | 0.190/ 0.076 |
| # = capsule size. N/A = combination not applicable N/U = not used | | | | | | | |

As an example, one may consider the preparation of 30 DUO capsules, where the outer capsule is size 00 and the inner capsule 3. What would be the total volume of powder (IFA + excipient) needed to fill the remaining volume of the outer capsule?

$$VT = \text{Number of capsules to be prepared x VR}_{\text{capsules . external}} \text{ (See table 1)}$$

Where:

VT = volume of powder to fill the capsules completely
$VR_{\text{caps} \cdot \text{External}}$ = remaining volume of the external capsule

Considering the combination of capsules # 00 with an inner capsule # 3 for the preparation of thirty capsules, the calculation of the total powder volume would be:

$$VT = 30 \times 0.510 = 15.3 \text{ mL} \cong 15 \text{ mL}$$

Therefore, to completely fill the remaining volume of the capsules, 15 mL of powder (IFA + Excipient) would be required.

The advantage and differential of the glass cylinder intended here is that it does not require any type of calculation. Filling the remaining volume is done quickly, easily and accurately, requiring no operator experience.

**Brief description of the drawings**

The present application can be compared to a glass cylinder with special graduations and is described according to the figures:

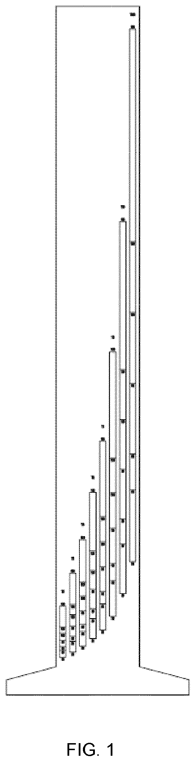

FIG. 1 shows the front view of the glass cylinder with special graduations (used to fill the internal capsule);

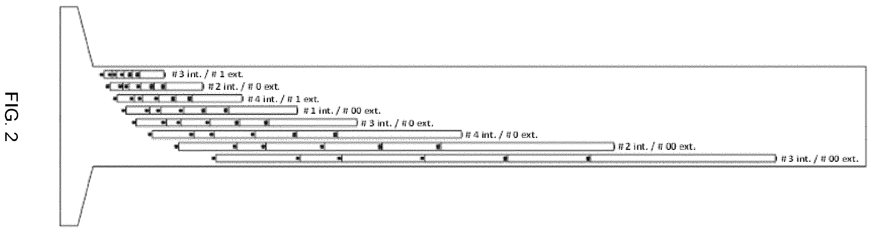

FIG. 2 shows the front view of the glass cylinder with special graduations for the remaining volume in the preparation of capsules in capsules;
FIG. 3 illustrates a breakdown of the glass cylinder's special graduations for the remaining volume; and
FIG. 4 shows the remaining volume, space between the internal capsule and the external capsule.

**Detailed description**

In order to overcome the deficiencies of the state of the art, the present application provides a glass cylinder (test tube type) with special and differentiated graduations for filling the remaining volume (Figure 4) in the compounding preparation of capsules in capsules.

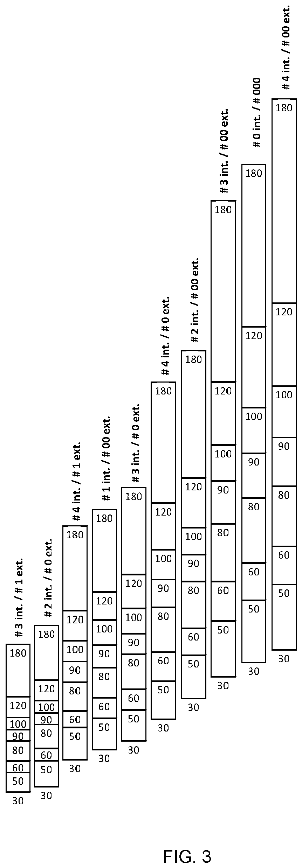

The technical solution adopted by the present application to solve these shortcomings is by means of a special graduation (Figure 3), which allows deciding the appropriate remaining volume for each capsule size combination, internal and external, which on the glass cylinder is stamped with (# 0 int./#000 ext.); (# 4 int. / # 00 ext.); (# 3 int. / # 1 ext.); (# 2 int. / # 0 ext.); (# 4 int. / # 1 ext.); (#1 int. / #00 ext.); (# 3 int. / # 0 ext.); (# 4 int. / # 0 ext.); (#2 int. / #00 ext.); (# 3 int. / # 00 ext.), as well as the number of capsules prescribed by the prescriber (if 30, 50, 60, 80, 90, 100, 120 and 180 capsules), in the same way stamped on the glass cylinder and also the amount of powder to fill the remaining volume, according to each horizontal line, with total precision and in a practical, fast way and eliminating any type of calculation for the preparation of the combined capsules.

The capsule-in-capsule technology presents, as main advantages, the possibility of reducing the frequency of drug administration, obtaining two profiles of drug release in a single formulation (e.g. immediate release of the contents of the external capsule and slow or enteric release of content of the internal capsule), prevention of the need for nocturnal administration during the period of sleep, reduction of fluctuation/variability of the circulating level of the drug, reduction of adverse effects due to plasmatic peaks, increase of bioavailability and increase of the patient's adherence to the treatment by greater convenience and simplification of administration. It is also possible to prepare a single formulation containing ingredients with different particle sizes and physical forms, for example: powder and pellets; powder and granules; powder and mini pills.

**Claims**

1. Glass cylinder, test-tube type, **characterized by** the fact that it has a special graduation suitable for estimating the remaining volume in capsule size combinations, internal and external, in which the glass cylinder is stamped with (# 0 int. / # 000 ext.); (# 4 int. / # 00 ext.); (# 3 int. / # 1 ext.); (# 2 int. / # 0 ext.); (# 4 int. / # 1 ext.); (#1 int. / #00 ext.); (# 3 int. / # 0 ext.); (# 4 int. / # 0 ext.); (#2 int. / #00 ext.); (# 3 int. / # 00 ext.), as well as graduations to estimate the number of capsules, stamped on the glass cylinder, and also the amount of powder to fill the remaining volume, according to each horizontal line, dispensing calculations for the preparation of combined capsules.

FIG. 1

FIG. 2

FIG. 3

#3 int. / #1 ext.

#2 int. / #0 ext.

#4 int. / #1 ext.

#1 int. / #00 ext.

#3 int. / #0 ext.

#4 int. / #0 ext.

#2 int. / #00 ext.

#3 int. / #00 ext.

#0 int. / #000

#4 int. / #00 ext.

FIG. 4

Europäisches
Patentamt

European
Patent Office

Office européen
des brevets

# EUROPEAN SEARCH REPORT

Application Number

EP 23 19 0762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BR 2020 2001 4032 U2 (SM EMPREENDIMENTOS FARM LTDA [BR]) 6 April 2021 (2021-04-06) * claim 1; figures 1-3 * | 1 | INV. A61J3/07 G01F19/00 B01L3/00 |
| A | US 2 698 540 A (COOPER MORRIS L) 4 January 1955 (1955-01-04) * figures 1,2,5 * | 1 | |
| A | US 10 947 012 B1 (JOHNSON STANLEY JOE [US] ET AL) 16 March 2021 (2021-03-16) * figures 1-6 * | 1 | |
| | | | TECHNICAL FIELDS SEARCHED (IPC) |
| | | | G01F B01L A61J |

The present search report has been drawn up for all claims

| Place of search | Date of completion of the search | Examiner |
|---|---|---|
| The Hague | 28 November 2023 | Rambaud, Dilek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 0762

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2023

| Patent document cited in search report | | Publication date | Patent family member(s) | | Publication date |
|---|---|---|---|---|---|
| BR 202020014032 | U2 | 06-04-2021 | NONE | | |
| US 2698540 | A | 04-01-1955 | NONE | | |
| US 10947012 | B1 | 16-03-2021 | US | 10947012 B1 | 16-03-2021 |
| | | | US | 2021155378 A1 | 27-05-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- BR 112013001476
- BR 112020000384
- BR 122020023630
- BR 2020200140324